# EUROPÄISCHE PATENTANMELDUNG

(11) **EP 1 217 049 A1**
(43) Veröffentlichungstag der Anmeldung: **26.06.2002**
(21) Anmeldenummer: 00128475.1
(22) Anmeldetag: 23.12.2000
(51) Int. Cl.: C09D 163/00, C04B 41/63

(54) **Voranstrich für Beton**

(71) Anmelder: Sika AG, vorm. Kaspar Winkler & Co., CH-8048 Zürich (CH)
(72) Erfinder: Trabesinger, Gerald Dr., 8049 Zürich (CH); Merz, Peter W. Dr., 8832 Wollerau (CH)
(74) Vertreter: Blum, Rudolf Emil Ernst

(57) **Zusammenfassung**

Es werden neue Voranstriche für die Verwendung auf porösen Untergründen, wie z.B. Beton, beschrieben. Diese erfindungsgemässen Voranstriche enthalten oder bestehen aus mindestens einem Epoxidharz, mindestens einem latenten Härter und mindestens einem Lösemittel. Sie zeichnen sich dadurch aus, dass sie einfach herstellbar sind, keine Isocyanatgruppen enthalten und insbesondere mit einkomponentigen isocyanatfreien Dichtstoffen, welche über Silangruppen vernetzen, eine gute alterungsbeständige Haftung ermöglichen.

## Beschreibung

Die vorliegende Erfindung betrifft neue Voranstriche für die Haftungsverbesserung von Substraten, insbesondere von porösen Untergründen, wie z.B. Beton, mit ein- oder zweikomponentigen Klebstoffsystemen.

Voranstriche, auch als Primer, Aktivator oder Haftvermittler bezeichnet, kommen überall dort zur Anwendung, wo der eingesetzte Klebstoff keine oder nur eine beschränkte Haftung zum Substrat bzw. Untergrund erzielt. Dabei sind die Komponenten des Klebstoffsystems, nämlich die Vorbehandlung, d.h. der Voranstrich, und der Klebstoff zueinander und zum Substrat abgestimmt. Solche Voranstriche können physikalisch verfestigend oder chemisch vernetzbar sein. Vorbehandlungssysteme für diverse Substrate sind bekannt, jedoch sind keine Voranstriche für poröse Untergründe auf dem Markt, welche einkomponentig, frei von Isocyanaten, frei von aromatischen Lösemitteln und mit einfachen Hilfsmitteln, wie z.B. Pinsel, applizierbar sind und in Kombination mit feuchtigkeitsreaktiven Klebstoffen bzw. Dichtstoffen, insbesondere mit isocyanatfreien Dichtstoffen auf der Basis von Silangruppen terminierten Prepolymeren, bekannt als Polyurethan-Hybrid oder MS-Kaneka Systeme, eine gute, alterungsbeständige Haftung aufweisen.

In EP 0 921 140 A1 und US 6,080,817, sind Voranstriche mit Isocyanatgruppen enthaltenden Bindemitteln beschrieben, wobei diese Voranstriche dem Aufbringen von Farbe bei der Automobilherstellung dienen.

Die vorliegende Erfindung hat zum Ziel, neue isocyanatfreie Voranstriche für die Haftverbesserung von Substraten, insbesondere von porösen Substraten, wie z.B. Beton bereitzustellen.

Überraschenderweise wurde nun gefunden, dass ein Voranstrich enthaltend oder bestehend aus mindestens einem Epoxidharz, mindestens einem latenten Härter und mindestens einem Lösemittel die gewünschte gute Affinität zu porösen Untergründen, wie z.B. Beton (DIN-genormt oder sandgestrahlt), Klinker saugend, Keramik, Gartenplatten, Sichtbackstein und diversen Holzarten (Buche, Föhre, Teak u.a.), sowie auch zu nicht-porösen Untergründen, wie Klinker glasiert, aufweist und damit eine gute Haftung des Beschichtungsmaterials ermöglicht. Bevorzugte Beschichtungsmaterialien sind insbesondere einkomponentige Dichtstoffe auf Silan-Basis. Ferner sind die erfindungsgemässen Voranstriche auch sehr einfach herstellbar.

Als Epoxidharze kommen in Betracht aliphatische und aromatische Epoxidgruppen tragende Verbindungen, insbesondere solche, die bei Raumtemperatur fest sind. Bevorzugte Epoxidharze sind: feste Epoxyharze auf Bisphenol-A-Basis mit mittlerem Molekulargewicht.

Latente Härter können aus den Stoffgruppen, Ketimine, Aldimine bzw. Oxazolidine ausgewählt werden, wobei cyclische, aliphatische Ketimine bevorzugt sind. Bevorzugte latente Härter sind: blockierte, cycloaliphatische Diamine und/oder Urethanbisoxazolidine.

Als Lösemittel kommen aus ökologischen Gründen bevorzugt aliphatische Lösemittel in Frage, wie z.B. Ethylacetat, Butylacetat, sowie weitere auf Acetat basierende Lösemittel, Aceton, Methylethylketon, Hexan, Heptan, Ethylalcohol, Cyclohexan etc. Der Lösemittelanteil im erfindungsgemässen Voranstrich liegt - insbesondere für die Applikation auf porösen Untergründen - im Bereich von 20 bis 80 Gew.-%, bevorzugt im Bereich von 50 bis 60 Gew.-%, wobei die Viskosität zwischen 20 und 200 mPas, inbesondere zwischen 40 und 80 mPas liegen sollte. Bei zu tiefer Viskosität ist die Ueberdeckung eines porösen Untergrundes, wie z.B. Beton, mangelhaft, was eine verringerte Haftungsqualität bewirkt. Bei zu hoher Viskosität werden die Poren von porösen Untergründen unzureichend ausgefüllt, was aufgrund reduzierter mechanischer Verankerung des Voranstriches zum Untergrund zu einer Haftungseinbusse führt. Zudem wird die Verarbeitbarkeit des Primers erschwert. Die optimale Schichtdicke liegt im trockenen Zustand zwischen 10 µm und 200 µm, insbesonders zwischen 40 µm und 90 µm. Durch Zugabe von kleinen Anteilen von thixotropierenden Füllstoffen wird mit einem Pinselstrich eine Schichtdicke von etwa 65 µm erreicht, ohne Thixotropierung beträgt eine Schichtdicke von üblicherweise ca. 48 µm.

Abhängig von der Verwendung und dem Anforderungsprofil können Additive, wie Haftvermittler, Trocknungsmittel, Katalysatoren, Pigmente, Fungizide, Stabilisatoren, Füllstoffe, wie z.B. ungecoatetes oder gecoatetes Siliciumdioxid, etc. zugemischt werden.

Bevorzugte Haftvermittler enthalten Zirkonate, Titanate oder Silangruppen, wobei der Haftvermittler bevorzugt entweder besonders hydrophobe Gruppen enthält oder mindestens eine zweite funktionelle Gruppe beinhaltet, die ausgewählt ist aus der Gruppe umfassend Epoxidgruppen, Acrylatgruppen , Allylgruppen, Vinylgruppen sowie Mischungen derselben. Über diese zweite funktionelle Gruppe wird der Haftvermittler während resp. nach der Härtungsreaktion unter dem Einfluss der durch Feuchtigkeit freigesetzten Aminverbindung des latenten Härters, in die Matrix eingebaut. Auch kann z.B. ein Amino-silan mit Ketonen bzw. Aldehyden zu einem Imino-silan umgesetzt werden, welches nach einem Kontakt mit Feuchtigkeit, für die Vernetzungsreaktion mit dem Epoxidharz, wieder freigesetzt wird.

Der Haftvermittler dient dazu, einerseits die Haftungsqualität über chemische und physikalische Vorgänge zum Untergrund zu verbessern, und andererseits dem Beschichtungsmaterial, welches bevorzugt einkomponentige und isocyanatfreie Dichtstoffe sind, Anknüpfungsgruppen zu bieten.

Der erfindungsgemässe Voranstrich kann zur Herstellung einer Beschichtung derart eingesetzt werden, dass er in einer geeigneten Schichtdicke aufgebracht und, gegebenenfalls nach einem Härtungszeitraum von vorzugsweise 30 bis 120 Minuten, mit einem einkomponentigen isocyanatfreien Klebstoff auf Silan-Basis überschichtet wird.

Im folgenden sollen einige Beispiele aufgezeigt werden, welche die Erfindung weiter veranschaulichen, den Umfang der Erfindung aber in keiner Weise beschränken sollen. Die erfindungsgemässen Voranstriche sind einfach herstellbar, lagerstabil, und besitzen eine gute Haftungseigenschaften auch nach Belastung, insbesondere nach 1 Woche Lagerung in einer gesättigten Calciumhydroxid-Lösung, und erfüllen die Normen DIN 18540F bzw. ISO 11600 25LM.

### 1) Herstellung der erfindungsgemässen Voranstriche Bsp. 1 und Bsp. 2

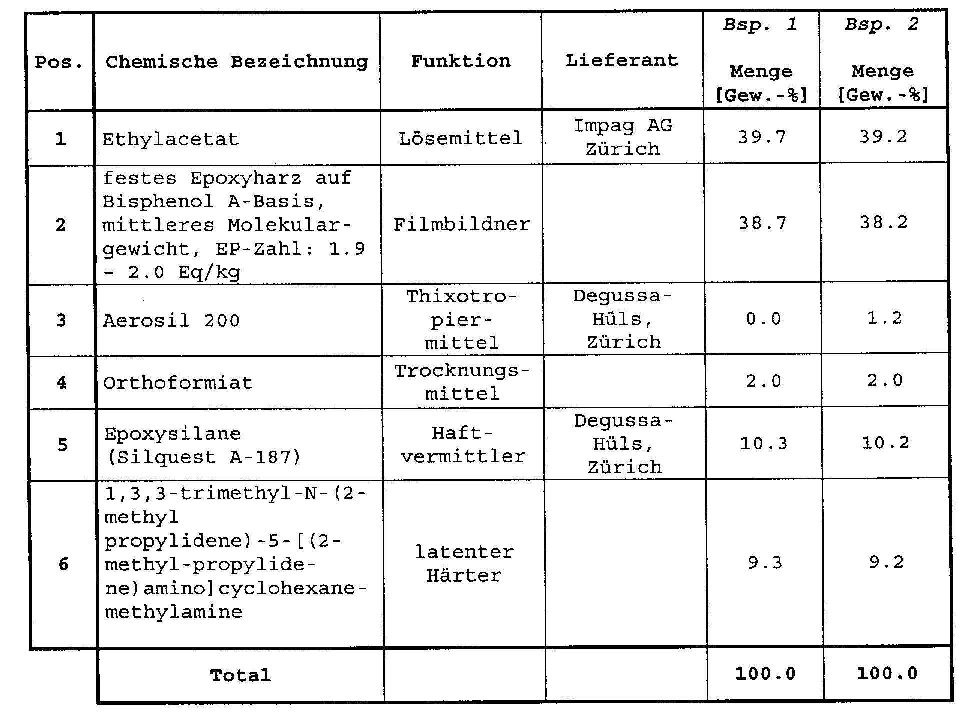

Alle Schritt wurden unter Stickstoff durchgeführt. Das Epoxyharz (Pos. 2) wurde in drei gleich grosse Portionen unterteilt. Eine Portion wurde jeweils vollständig gelöst, ehe die nächste Portion zugegeben wurde. Die Positionen 4, 5 und 6 wurden jeweils nacheinander unter ständigem Rühren hinzugegeben. Das Thixotropiermittel Aerosil 200 wurde mittels intensiven Rührens in die Epoxyharz-Lösung eindispergiert.

### 2) Prüfresultate mit dem erfindungsgemässen Voranstrich in Kombination mit PUR-Hybrid Klebstoff, Sikaflex-20AT

| **Substrat** | **Referenz** | **Beispiel 1** | **Beispiel 2** |
|---|---|---|---|
| **Beton, sandgestrahlt** | 2/5 | 1/2 | 1/1 |
| **Gartenplatte** | 1/5 | 1/1 | 1/1 |
| **Beton, DIN-genormt** | 1/5 | 1/1 | 1/1 |
| **Ziegel** | 1/4 | 1/2 | 1/1 |
| **Klinker, porös** | 1/3 | 1/1 | 1/1 |
| **Klinker, glasiert** | 1/5 | 1/1 | 1/1 |
| **Keramik, porös** | 1/4 | 1/2 | 1/1 |
| **Buche** | 1/4 | 1/2 | 1/2 |
| Legende: 1 = >95% Kohäsionsbruch, in Ordnung (i.o.) 2 = 75% - 95% Kohäsionsbruch, i.o. 3 = 25% - 75% Kohäsionsbruch, nicht i.o. 4 = < 25% Kohäsionsbruch, nicht i.o. 5 = 0% Kohäsionsbruch, nicht i.o. | | | |

Die erste Zahl gibt die Bewertung der Haftung nach 2 Wochen Klimaraumlagerung an (23°C, 50% rel. Luftfeuchtigkeit).

Die zweite Zahl gibt die Haftung nach 2 Wochen Klimalagerung und 1 Woche Wasserlagerung bei Raumtemperatur an.

Die Beispiele 1 und 2 zeigen, dass der erfindungsgemässe Voranstrich nach der Wasserlagerung im Vergleich zur Referenz eine sehr gute Haftung gewährleistet.

## Patentansprüche

1. Voranstrich, **dadurch gekennzeichnet, dass** er mindestens ein Epoxidharz, mindestens einen latenten Härter und mindestens ein Lösemittel enthält oder daraus besteht.

2. Voranstrich gemäss Anspruch 1, **dadurch gekennzeichnet, dass** er eine Viskosität zwischen 20 und 200 mPas, inbesondere zwischen 40 und 80 mPas aufweist.

3. Voranstrich gemäss Anspruch 1 oder 2, **dadurch gekennzeichnet, dass** er mindestens ein haftvermittelndes Additiv, insbesondere ein hydrophobes haftvermittelndes Additiv enthält.

4. Voranstrich gemäss Anspruch 3, **dadurch gekennzeichnet, dass** das haftvermittelnde Additiv mindestens 2 funktionelle Gruppen enthält, wobei mindestens eine davon mit dem latenten Härter reagieren kann und mindestens eine davon eine Silangruppe oder Titanatgruppe ist.

5. Voranstrich gemäss Anspruch 3 oder 4, **dadurch gekennzeichnet, dass** die mit dem latenten Härter reagierende funktionelle Gruppe eine Epoxidgruppe und/oder eine Acrylatgruppe und/oder eine Allylgruppe ist.

6. Voranstrich gemäss einem der Ansprüche 1 bis 5, **dadurch gekennzeichnet, dass** das Lösemittel frei von Aromaten ist.

7. Voranstrich gemäss einem der Ansprüche 1 bis 6, **dadurch gekennzeichnet, dass** der latente Härter ein Oxazolidin und/oder ein Ketimin und/oder ein Aldimin ist.

8. Voranstrich gemäss einem der Ansprüche 1 bis 7, **dadurch gekennzeichnet, dass** der latente Härter zusätzlich zu den die Härtung bewirkenden Gruppen noch zusätzlich eine Silangruppe enthält.

9. Voranstrich gemäss einem der Ansprüche 1 bis 8, **dadurch gekennzeichnet, dass** das Epoxidharz fest ist.

10. Verfahren zum Aufbringen eines Voranstrichs auf einen Untergrund, **dadurch gekennzeichnet, dass** der Voranstrich gemäss einem der Ansprüche 1 bis 9 in einer Schichtdicke nach Trocknung von 10 µm bis 200 µm, insbesondere von 40 µm bis 90 µm aufgetragen wird.

11. Verfahren gemäss Anspruch 10, **dadurch gekennzeichnet, dass** der Untergrund ein poröser Untergrund, insbesondere Beton, ist.

12. Verfahren zur Herstellung einer Beschichtung, **dadurch gekennzeichnet, dass** ein nach dem Verfahren gemäss Anspruch 10 oder 11 aufgebrachter Voranstrich, gegebenenfalls nach einem Härtungszeitraum von vorzugsweise 30 bis 120 Minuten, mit einem einkomponentigen isocyanatfreien Klebstoff auf Silan-Basis überschichtet wird.

13. Verwendung eines Voranstrichs gemäss einem der Ansprüche 1 bis 9 zur Verbesserung der Haftung eines einkomponentigen isocyanatfreien Klebstoffs auf Silan-Basis auf einem porösen Untergrund, insbesondere auf Beton.
